# EUROPÄISCHE PATENTSCHRIFT

(11) **EP 2 191 240 B1**
(45) Veröffentlichungstag und Bekanntmachung des Hinweises auf die Patenterteilung: **01.07.2015**
(21) Anmeldenummer: 08775098.0
(22) Anmeldetag: 15.07.2008
(51) Int. Cl.: G01B 3/04, G01D 7/00

(54) **MESSVORRICHTUNG UND MESS- UND/ODER WERKZEUGGERÄT**
MEASURING DEVICE AND MEASURING INSTRUMENT AND/OR MACHINE TOOL
DISPOSITIF DE MESURE ET APPAREIL DE MESURE ET/OU MACHINE-OUTIL

(30) Priorität: 12.09.2007 DE 102007043494
(43) Veröffentlichungstag der Anmeldung: 02.06.2010
(73) Patentinhaber: Robert Bosch GmbH, 70442 Stuttgart (DE)
(72) Erfinder: TIEDE, Steffen, 71083 Herrenberg (DE)
(86) Internationale Anmeldenummer: PCT/EP2008/059239
(87) Internationale Veröffentlichungsnummer: WO 2009/033858

(56) Entgegenhaltungen:
- WO-A-01/07993
- US-A1- 2003 173 408
- ENGIN M ET AL: "Recent developments and trends in biomedical sensors" MEASUREMENT, INSTITUTE OF MEASUREMENT AND CONTROL. LONDON, GB, Bd. 37, Nr. 2, 1. März 2005 (2005-03-01), Seiten 173-188, XP004737034 ISSN: 0263-2241

## Beschreibung

### Stand der Technik

Die Erfindung betrifft eine Messvorrichtung mit einer Anzeigeeinheit, in der in einer Schaltungsanordnung eine elektrooptische Darstellungseinheit angeordnet, insbesondere mit einer Elektronikeinheit kombiniert ist, wobei die Darstellungseinheit zur ablesbaren Darstellung eines Messergebnisses und die Elektronikeinheit zum Steuern der Darstellung des Messergebnisses ausgelegt ist.

Messvorrichtungen dieser Art sind beispielsweise bekannt mit Flüssigkristallanzeigen. Solche Flüssigkristallanzeigen werden beispielsweise bei Handwerkzeugmaschinen verwendet, wobei auf Flüssigkristallanzeigen basierende Anzeigeeinheiten üblicherweise mit Glas- oder Kunststoffgehäuseabdeckungen im Klarsichtbereich ausgestattet werden, um sie vor Beschädigungen bei Stoß- und Schlageinwirkung zu schützen. Solche Anzeigeeinheiten sind deshalb im wesentlichen auf eindimensionale ebene Ausführungen beschränkt, was die Gestaltungsmöglichkeit solcher Anzeigeeinheiten einschränkt. Dies ist insbesondere bei Anzeigeeinheiten bei Mess- und/oder Werkzeuggeräten problematisch, welche zum Teil ergonomisch ausgebildete Gehäuseformen aufweisen. Weiterhin sind auf Flüssigkristallanzeigen beruhende Anzeigeeinheiten vergleichsweise dick aufgrund der für den Oberflächenschutz eingesetzten Glas- oder Kunststoffabdeckungen ausgeführt. Linealdarstellungen auf solchen Anzeigeeinheiten können somit regelmäßig nur mit einem in Kauf zu nehmenden Paralaxefehler abgelesen werden.

Aus der WO 01/07993 A1 ist ein am Körper tragbares Element, wie beispielsweise ein Schuh, Handschuh, Hut oder Hose oder dergleichen mit einem flexiblen Display und einem Steuerschaltkreis für dieses Display bekannt. Das Display dieser Vorrichtung besteht aus einer transparenten, oberen und einer unteren Deckschicht, zwischen denen ein filmförmiges Flüssigkristalldisplay (LCD), insbesondere ein ferro-elektrisches LCD, angeordnet ist. Über das Display der WO 01/07993 A1 können Informationen, wie beispielsweise die Herzfrequenz oder die Temperatur des Trägers der Vorrichtung angezeigt werden. In Verbindung mit einem entsprechenden Sensor ermöglicht das Display die physiologische Überwachung von Körperfunktionen

Aus der US 2003/0173408 A1 ist eine Personenidentifikationseinrichtung in Form eines flexiblen Bandes bekannt, die in Form eines Armbandes, eines Armreifens oder auch eines Ansteckers am Körper getragen werden kann. Die Einrichtung der US 2003/0173408 A1 kann mit einem flexiblen Display zur Wiedergabe von insbesondere biometrischen Daten versehen sein. Als Display wir in der US 2003/0173408 A1 ein LCD ein Licht emittierender Polymer oder auch ein Dioden-Kondensator vorgeschlagen

### Offenbarung der Erfindung

### Technische Aufgabe

Wünschenswert ist eine Anzeigeeinheit, die flexibler in ihrer Ausführung und dennoch genauer ablesbar ist.

An dieser Stelle setzt die Erfindung an, deren Aufgabe es ist, eine Messvorrichtung der eingangs genannten Art zu verbessern, insbesondere hinsichtlich ihrer Gestaltungsart flexibler und hinsichtlich ihrer Ablesemöglichkeit genauer auszuführen.

### Technische Lösung

Die Aufgabe wird durch die Erfindung mit einer Messvorrichtung der eingangs genannten Art gelöst, bei der erfindungsgemäß die Darstellungseinheit auf einem dünnflächigen Träger zur Bildung einer flexiblen Schichtanordnung aufgebracht ist.

Die Erfindung führt auch auf ein Mess- und/oder Werkzeuggerät, insbesondere ein transportables Mess- und/oder Werkzeuggerät mit einer solchen Messvorrichtung, insbesondere mit einer Distanzmessvorrichtung gemäß der Erfindung.

Die Erfindung geht von der Überlegung aus, dass sich Flüssigkristallanzeigen für eine Anzeigeeinheit im Rahmen einer Messvorrichtung nur bedingt eignen, wenn es darum geht, die Messvorrichtung, insbesondere im Rahmen eines Mess- und/oder Werkzeuggeräts, das auch transportabel sein soll, zu handhaben. Die Erfindung hat erkannt, dass sich eine Anzeigeeinheit in besonders vorteilhafter Weise mit einer geschichteten Darstellungseinheit realisieren lässt, die, auf einem dünnflächigen Träger aufgebracht, zur Bildung einer flexiblen Schichtanordnung geeignet ist. Mit anderen Worten sieht das Konzept der Erfindung im wesentlichen die Anwendung eines Displays in Form einer elektronischen Folie vor, die sich insbesondere im Falle von Mess- und/oder Werkzeuggeräten für die Darstellung von Informations- und Signalelementen sowie von Skalenteilen und Zahlenwerten eignen. Solche, auch als elektronisches Papier bezeichnete, FolienDisplays zeichnen sich durch eine Reihe von Vorteilen aus, die, insbesondere im Rahmen der vorgenannten Anwendung, durch Flüssigkristallanzeigen nicht erreicht werden können. Zum einen erweist sich eine als Folie oder Folienanordnung gebildete Schaltungsanordnung für die Anzeigeeinheit als äußerst biegsam und kann demzufolge an gebogenen Oberflächen eingesetzt werden, so dass sich damit ein von Gerätegehäusen angeglichener Konturenverlauf für die Anzeigeeinheit erreichen lässt, ohne dass sich dabei die Qualität der Darstellung ändert. Darüber hinaus lassen sich Anzeigeeinheiten im Allgemeinen mit einem hinreichenden Schutz vor mechanischer Beschädigung ausführen oder versehen. Da solche vergleichsweise dünnschichtigen Anzeigeeinheiten um ein Vielfaches dünner sind als bisher bekannte Flüssigkristallanzeigen lassen sie sich unmittelbar an Messkanten anbringen und zudem paralaxefrei ablesen.

Vorteilhafte Weiterbildungen der Erfindung sind den Unteransprüchen zu entnehmen, welche im Einzelnen das Konzept der Erfindung im Rahmen der Aufgabenstellung und hinsichtlich weiterer Vorteile weiterbilden.

Anzeigeeinheiten für eine Messvorrichtung lassen sich als Endlosmaterial, beispielsweise als aufrollbare Meterware, herstellen - dies hat den Vorteil, dass sich Messlängen in einem praktisch beliebigen Bereich realisieren lassen. Das Konzept der Erfindung bietet die Möglichkeit, auch farbige Darstellungen zu realisieren. Zusätzlich erlaubt der vergleichsweise geringe Stromverbrauch solcher Anzeigeeinheiten, eine praktisch dauerhafte Darstellung von Anzeigewerten, beispielsweise als Schrift, Zahlenwert oder Skalenteilung. Soweit bei einer sich ändernden Darstellung eine Energieversorgung notwendig ist, lässt sich diese netzunabhängig realisieren, beispielsweise durch eine Batterie. Als besonders vorteilhaft lassen sich ggf. lösliche DisplayElemente, beispielsweise als sogenannte elektronische Tinte, auf flexiblen Substraten in industriellen Produktionsdruckverfahren preiswert herstellen.

### Kurze Beschreibung der Zeichnungen

Weitere Vorteile, Merkmale und Einzelheiten der Erfindung ergeben sich aus der Beschreibung bevorzugter Ausführungsbeispiele sowie anhand der Zeichnungen. Im Einzelnen zeigt die Zeichnung in:
- Fig. 1:: eine Ansichtsdarstellung (Fig. 1B, Fig. 1C) und Schnittdarstellung (Fig. 1A) eines Messgeräts mit einer Messvorrichtung im Rahmen einer ersten besonders bevorzugten Ausführungsform der Erfindung;
- Fig. 2:: eine Ansichtsdarstellung (Fig. 2B) und Schnittdarstellung (Fig. 2A, Fig. 2C) eines Distanzmessgeräts zur berührungslosen Distanzmessung im Rahmen einer besonders bevorzugten zweiten Ausführungsform der Erfindung;
- Fig. 3:: eine Schnittdarstellung als Detail einer Ausführungsform der Fig. 1 und Fig. 2 zur Positionierung der Anzeigeeinheit im Randbereich eines Lineals.

### Ausführungsformen der Erfindung

In den Figuren sind gleiche Bauteile und Bauteile mit der gleichen Funktion mit den gleichen Bezugszeichen gekennzeichnet.

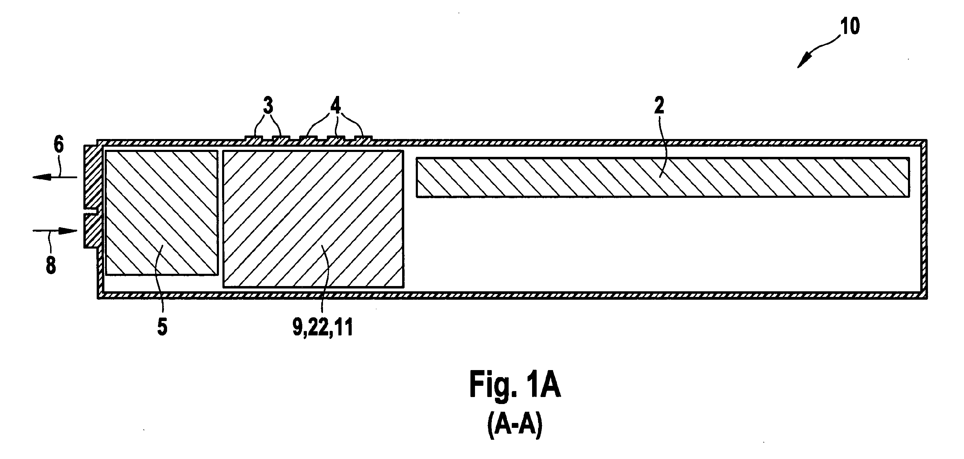

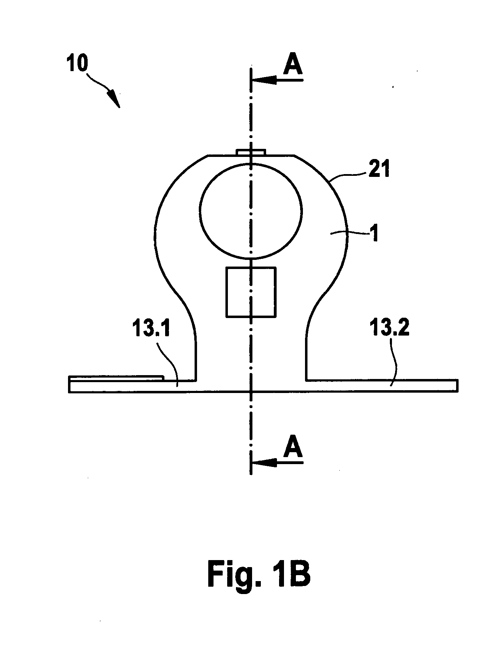

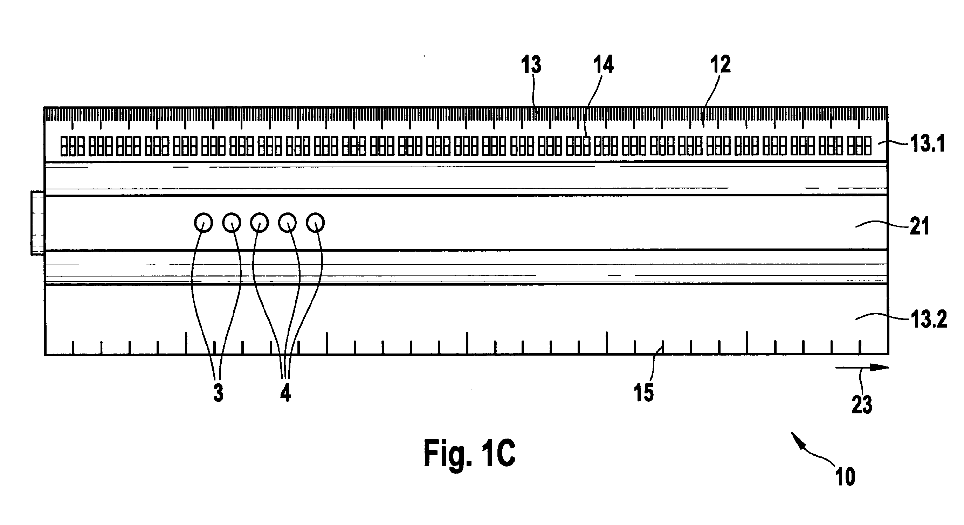

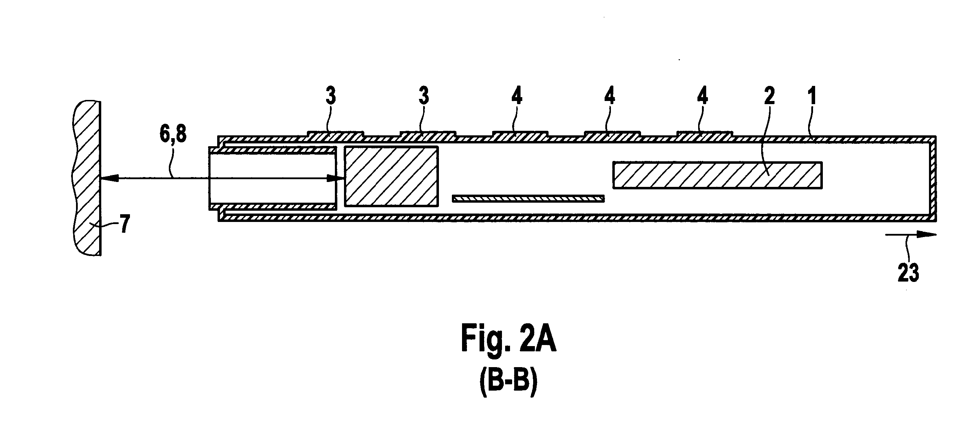

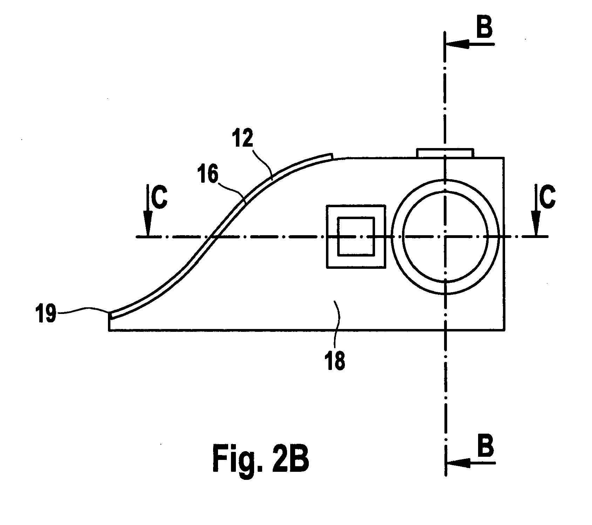

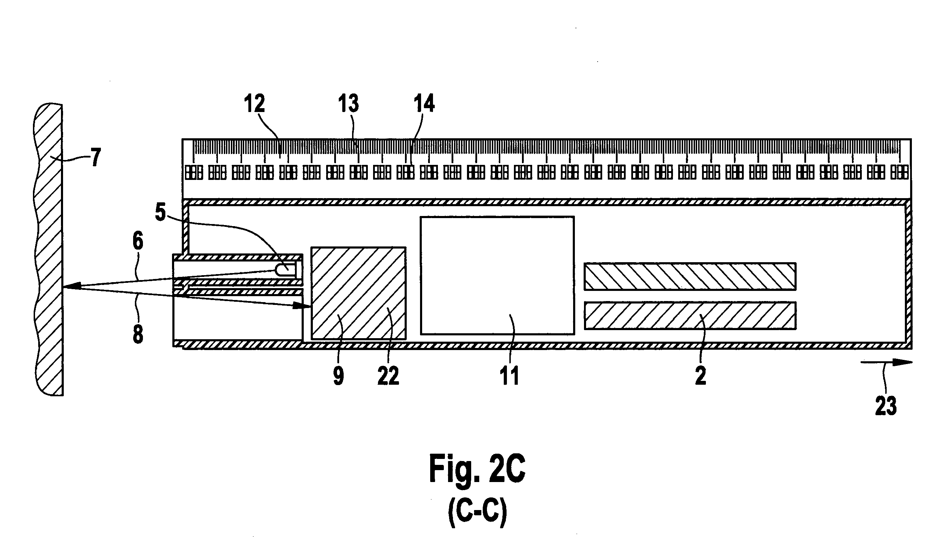

Im Folgenden werden zwei Ausführungsformen gemäß der Erfindung im Rahmen einer transportablen Vorrichtung - zur berührenden Distanzmessung gemäß Fig. 1 oder berührungslosen Distanzmessung gemäß Fig. 2 - bei der ein Lichtstrahl als Messsignal auf ein Objekt ausgesendet und zurückgeworfen wird, beschrieben. Im Gegensatz zur direkten, d.h. berührenden Distanzmessung durch unmittelbaren Vergleich einer Strecke zwischen zwei Punkten, beispielsweise mit einem in Fig. 1 dargestellten Lineal oder Gliedermaßstab 15, werden im Rahmen einer indirekten Distanzmessung, d.h. berührungslosen Distanzmessung, die Laufzeiten eines ausgesendeten und reflektierten Messsignals 6, 8 miteinander verglichen und über eine Elektronikeinheit 11 an eine Anzeigeinheit mit einer Darstellungseinheit 12 in Ausführung eines Längenmaßstabs übertragen und zur Ablesung eines Messwertes bereitgestellt.

Dazu zeigt Fig. 1 ein Distanzmessgerät 10, welches in Ansicht A in einer längsgestreckten Querschnittsdarstellung, in Ansicht B in einer Stirnansicht und in Ansicht C als Draufsicht gezeigt ist. Das Distanzmessgerät 10 ist als Maßstab mit einem ergonomisch ausgebildeten Griffbereich 21 eines Gehäuses 1 und einem Linealträger 13.1, 13.2 ausgeführt. Auf dem einen Teil 13.1 des Linealträgers ist eine Anzeigeeinheit mit einer Darstellungseinheit 12 in Form eines Foliendisplays als optische Ausgabeeinheit mit Skalenteilen 13 und Zahlenwerten 14 angeordnet. Auf dem anderen Teil 13.2 des Linealträgers ist eine bekannte feste Maßskala 15 parallel zur Längserstrechung 23 angeordnet.

Im Griffbereich 11 des Gehäuses 1 sind weitere zur Bedienung geeignete Anzeige- 3 und Schalterelemente 4 angeordnet. Der Maßstab 15 kann bei dieser Ausführungsform als statischer, zur direkten Distanzmessung ausgelegter Maßstab vorgesehen sein. Zusätzlich oder alternativ kann das Messgerät 10 zur weiteren direkten oder indirekten Distanzmessung mit weiteren elektrooptischen Komponenten 5, 9, 22, 11 versehen sein, welche im Einzelnen im Rahmen der zweiten Ausführungsform beschrieben sind. Dazu kann grundsätzlich ein Messsignal 6 in Form eines Lichtstrahls, z.B. als moduliertes Lasersignal, von einem Messgerät 10 auf eine Bauteiloberfläche eines Zielobjekts 7 ausgesendet werden. Von dort aus reflektiert trifft das Messsignal 8 auf eine Empfängeroptik 9, um dann über eine CCD-Sensorik 22 und Ausgabe- und Auswerteelektronik 11 zwecks Wiedergabe des Messergebnisses in ein abstandsproportionales Signal umgewandelt zu werden. Vorliegend werden über die gleiche Elektronikeinheit 11 auch Skalenteile 13 und Zahlenwerte 14 für das Foliendisplay generiert. Alternativ oder zusätzlich kann eine solche Steuerung des Displays auch im Foliendisplay 12 als aufgedruckte Elektronikkomponente realisiert sein.

Ein abstandsproportionales Signal wird also mit Hilfe der Anzeigeeinheit auf eine Längenmessskala übertragen, die auf einer Displayfolie 12 darstellbar ist und die einen Teilabschnitt der gesamten Messstrecke repräsentiert und auf dessen Bereich Skalen und Zahlenwerte abgelesen werden können.

Die Längenmessskala mit Skalenteilen 13 und Zahlenwerten 14 ist in Form eines Lineals ausgeführt, um messbegleitende Tätigkeiten wie Anzeichnen, Abtragen oder Markieren von Punkten oder Linien durchführen zu können. Im Gegensatz zur direkten Messung mit mechanischen Linealen, Gliedermaßstäben oder Bandmaßen wird hier mit einem digitalen Meterstab gemessen, dessen Länge durch die Vorrichtung begrenzt ist (beispielsweise 0,5m), bei der aber wesentlich größere Messlängen (>100m) messtechnisch erfasst werden können.

Über die Messkette Empfängeroptik und Empfängersensorik 9, 22 sowie Ausgabeelektronik 11 kann eine Skalenanpassung automatisch in kurzer zeitlicher Abfolge vorgenommen werden, so dass beim Bewegen der Vorrichtung 10 die Entfernung ständig gemessen und auf dem Display 12 des Linealträgers 13.1 entsprechende Messwerte 13, 14 angezeigt werden können.

Das Konzept der Erfindung schlägt vor, die Längenmessskala vorteilhaft als Foliendisplay 12 auszuführen.

Diese Foliendisplays - auch als elektronisches Papier bezeichnet - sind dünn (Bruchteil eines Millimeters), leicht, extrem biegsam, ohne dass sich die Qualität der Darstellung beim Biegen verändert. Damit sind diese Folien zur Darstellung von Messwerten und Skalenteilen auf orthogonal zur Messsignalrichtung gewölbten Flächen besonders gut geeignet wie die in Fig. 2B gezeigt ist. Auch sind farbige Darstellungen möglich.

Da diese Folien ohne Stromzufuhr eine stabile Anzeige über einen längeren Zeitraum gewährleisten, wird vorgeschlagen, diesen Zustand für eine Kombination von direkter und indirekter Längenmessung zu nutzen, und zwar so, dass im stromlosen Zustand eine feste Skalierung mit Zahlenwerten analog eines mechanischen Signals im Display angezeigt wird. Damit kann die Längenmessskala z.B. zum Abtragen von Messwerten genutzt werden. Durch einen Einschaltvorgang erlischt dann diese Anzeige für eine direkte Längenmessung, und es wird die indirekte Längenmessung aktiviert. Diese Nutzung beider Messmöglichkeiten ist dann von Vorteil, wenn vom bereits ermittelten Messwert zusätzlich eine Strecke innerhalb des Ausdehnungsbereichs der Messlinienlänge des Lineals abgetragen werden soll.

Ein weiterer Vorteil für den Einsatz als Längenmessskala besteht in ihrer kostengünstigen Herstellung. So können Displayelemente wie die für die Darstellungseinheit 12 auf eine maßlich abgestimmte Polyesterfolie in herkömmlichen Druck-Produktions-Prozessen wie Offsetdruck, Tiefdruck oder Siebdruckverfahren hergestellt werden. Die Verbindung zum Gehäuse der Messeinrichtung geschieht durch geeignete Klebeverfahren.

Die Messvorrichtung der Fig. 2 weist ein Gehäuse 1, dessen Innenbereich elektronische Komponenten zur Signalerzeugung, -Verarbeitung, Auswertung und Darstellung beinhaltet auf. Außerdem befindet sich in dem Gehäuse 1 die Stromversorgung 2 sowie Anzeige- 3 und Schalterelemente 4 zur Bedienung.

Zunächst wird von der Laserdiode 5 ein moduliertes Lasersignal 6 auf ein Zielobjekt 7 ausgesendet, dort reflektiert, als zurücklaufendes Messsignal 8 von einer Empfängeroptik 9 aufgenommen und einem CCD-Sensor 22 zurückgeführt.

Nach der Laufzeitmessung des ausgesendeten und zurückgeworfenen Strahls wird über eine Displayansteuerung 11 das Ergebnis der erfolgten Distanzmessung auf ein Foliendisplay 12 als optische Ausgabeeinheit in Form von Skalenteilen 13 und Zahlenwerten 14 angezeigt. Wie aus der Zeichnung zu ersehen ist, erstreckt sich die Folie parallel zur Längsrichtung 23 des Messsignals annähernd über die gesamte Länge der Vorrichtung.

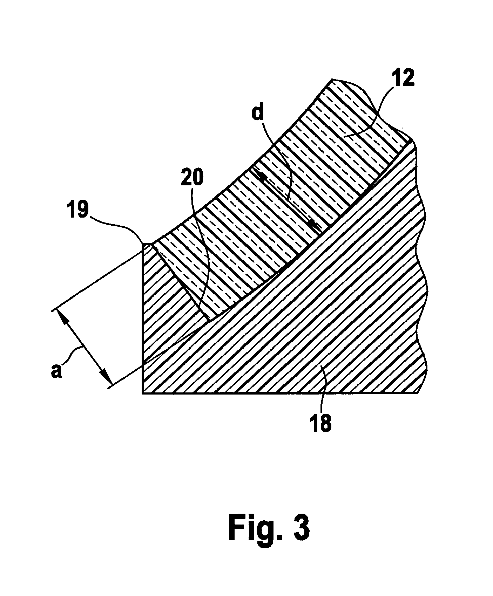

Wie aus Fig. 3 ersichtlich, wird ist in der orthogonalen Richtung auf vorteilhafte Weise demonstriert, dass die Folie einer Krümmung 16 folgt und auf Grund ihrer geringen Dickenabmessung 17 mit dem Linealträgerteil 18 bündig zur Kante 19 verbunden werden kann.

Da auch die Skalierung bis zum Rand der Folie verläuft, können Messwerte parallaxenfrei abgelesen bzw. auf die Arbeitsfläche abgetragen oder angezeichnet werden.

Zum Zwecke des Kantenschutzes der Displayfolie und deren exakten Fixierung bei der Montage auf das Trägerteil 18 als Teil des Gehäuses 1 ist eine Gehäusevertiefung 20 vorgesehen, die sich über den Längsbereich des Lineals erstreckt. In dieser Vertiefung wird die Folie durch geeignete Klebeverfahren befestigt.

Um bei der Ausgestaltung dieser Vertiefung die Ablesegenauigkeit nicht zu beeinträchtigen, wird ein Richtwert angestrebt. So soll der Wert des Tiefenmaßes a den der Foliendicke d nicht überschreiten.

Die Erfindung geht aus von einer Messvorrichtung mit einer Anzeigeeinheit, in der in einer Schaltungsanordnung eine elektrooptische Darstellungseinheit 12 angeordnet, insbesondere mit einer Elektronikeinheit kombiniert ist, wobei die Darstellungseinheit 12 zur ablesbaren Darstellung eines Messergebnisses und die Elektronikeinheit zum Steuern der Darstellung des Messergebnisses ausgelegt ist. Zur Verbesserung bisher bekannter, vergleichsweise dicken und unflexiblen Messvorrichtungen sieht die Erfindung vor, dass die Darstellungsanordnung 12, insbesondere die gesamte Schaltungsanordnung, geschichtet und auf einem dünnflächigen Träger zur Bildung einer flexiblen Schichtanordnung aufgebracht ist.

## Patentansprüche

1. Messvorrichtung, insbesondere eine Distanzmessvorrichtung (10) zur berührenden und/oder berührungslosen Distanzmessung, mit einer Anzeigeeinheit, in der in einer Schaltungsanordnung eine elektrooptische Darstellungseinheit (12) mit einer Elektronikeinheit (11) kombiniert ist, wobei die Darstellungseinheit (12) zur ablesbaren Darstellung eines Messergebnisses und die Elektronikeinheit (11) zum Steuern der Darstellung des Messergebnisses ausgelegt ist, wobei die Darstellungseinheit (12) auf einem dünnflächigen Träger zur Bildung einer flexiblen Schichtanordnung aufgebracht ist, **dadurch gekennzeichnet, dass** die Elektronikeinheit (11) zum Generieren einer Skala für das Messergebnis, insbesondere aufweisend Skalenteile (13) und/oder Zahlenwerte (14) zur Repräsentation eines Teilabschnitts einer Messstrecke, ausgelegt ist und die Darstellungseinheit (12) in Form eines digitalen Lineals zur Wiedergabe der Skala ausgebildet ist

2. Messvorrichtung nach Anspruch 1, **dadurch gekennzeichnet, dass** die Darstellungseinheit (12) in Form eines Foliendisplays gebildet ist.

3. Messvorrichtung nach Anspruch 1 oder 2, **dadurch gekennzeichnet, dass** die Schaltungsanordnung auf dem dünnflächigen Träger aufgedruckt ist.

4. Messvorrichtung nach einem der Ansprüche 1 bis 3, **dadurch gekennzeichnet, dass** der Träger in Form eines Polyestermaterials gebildet ist.

5. Messvorrichtung nach einem der Ansprüche 1 bis 4, **dadurch gekennzeichnet, dass** die Darstellungseinheit (12) eine Schichtdicke aufweist, die geringer als ein halber Millimeter ist.

6. Messvorrichtung nach einem der Ansprüche 1 bis 5, **dadurch gekennzeichnet, dass** die Darstellungseinheit (12) zur farbigen Darstellung des Messergebnisses ausgelegt ist.

7. Messvorrichtung nach einem der Ansprüche 1 bis 6, **dadurch gekennzeichnet, dass** die Darstellungseinheit (12) einen mehrschichtigen Aufbau, insbesondere einen mehrschichtigen Aufbau zur Darstellung einer roten und/oder grünen und/oder blauen Komponente einer farbigen Darstellung, aufweist.

8. Messvorrichtung nach einem der Ansprüche 1 bis 7 mit einer netzunabhängigen Energieversorgung (2).

9. Messvorrichtung nach einem der Ansprüche 1 bis 8, weiter aufweisend eine optische Sende- und/oder Empfangseinheit, insbesondere aufweisend eine Sendeeinheit in Form einer Laserdiode (5) und/oder eine Empfangseinheit (9) in Form einer Optik, insbesondere aufweisend eine CCD-Sensorik (22).

10. Messvorrichtung nach einem der Ansprüche 1 bis 9, **dadurch gekennzeichnet, dass** die Elektronikeinheit (11) zur Anpassung einer Skala bei sich ändernden Mossergebnissen ausgelegt ist, insbesondere zur ständigen Anpassung der Darstellung bei einer Bewegung der Messvorrichtung ausgelegt ist.

11. Messvorrichtung nach einem der Ansprüche 1 bis 10, aufweisend eine weitere Elektronikeinheit und/oder eine in der Elektronikeinheit (11) integrierte Auswerteeinheit, wobei die Auswerteeinheit zum Vergleich eines ausgesendeten und empfangenen optischen Signals (6, 8) und Umwandlung in ein abstandsproportionales Distanzsignal ausgelegt Ist.

12. Mess- und/oder Werkzeuggerät, insbesondere transportables Mess- und/oder Werkzeuggerät, mit einer Messvorrichtung, vorzugsweise einer Distanzmessvorrichtung (10), nach einem der vorhergehenden Ansprüche.

13. Mess- und/oder Werkzeuggerät, nach Anspruch 12, aufweisend einen Linealträger (13.1), mit dem die Darstellungseinheit (12), insbesondere bündig mit einer Kante (19) verbunden ist.

14. Mess- und/oder Werkzeuggerät, nach Anspruch 12 oder 13, **dadurch gekennzeichnet, dass** die Darstellungseinheit (12) eine Krümmung (16) aufweist.

15. Mess- und/oder Werkzeuggerät, nach einem der vorhergehenden Ansprüche 12 bis 14, **dadurch gekennzeichnet, dass** die Darstellungseinheit (12) in einer Vertiefung (20) des Linealträgers (13.1) angeordnet, insbesondere eingeklebt, ist.

16. Mess- und/oder Werkzeuggerät, nach Anspruch 15, **dadurch gekennzeichnet, dass** die Vertiefung (20) ein Tiefenmaß (a) aufweist, welches im Bereich oder geringer als eine Dicke (d) der Messvorrichtung ist.

## Claims

1. Measuring device, in particular a distance measuring device (10) for contact and/or contactless distance measurement, having an indicating unit in which an electro-optical display unit (12) is combined with an electronics unit (11) in a circuit arrangement, the display unit (12) being designed for the readout display of a measurement result and the electronics unit (11) being designed to control the display of the measurement result, the display unit (12) being applied to a thin-sheet support to form a flexible layer arrangement, **characterized in that** the electronics unit (11) is designed to generate a scale for the measurement result, in particular having scale portions (13) and/or numerical values (14) for representing a segment of a measuring distance, and the display unit (12) in the form of a digital ruler is designed for reproducing the scale.

2. Measuring device according to Claim 1, **characterized in that** the display unit (12) is in the form of a foil display.

3. Measuring device according to Claim 1 or 2, **characterized in that** the circuit arrangement is printed on the thin-sheet support.

4. Measuring device according to one of Claims 1 to 3, **characterized in that** the support is in the form of a polyester material.

5. Measuring device according to one of Claims 1 to 4, **characterized in that** the display unit (12) has a layer thickness which is less than half a millimetre.

6. Measuring device according to one of Claims 1 to 5, **characterized in that** the display unit (12) is designed for colour display of the measurement result.

7. Measuring device according to one of Claims 1 to 6, **characterized in that** the display unit (12) has a multilayer structure, in particular a multilayer structure for displaying a red and/or green and/or blue component of a colour display.

8. Measuring device according to one of Claims 1 to 7, having a mains-independent power supply (2).

9. Measuring device according to one of Claims 1 to 8, further having an optical transmitting and/or receiving unit, in particular having a transmitting unit in the form of a laser diode (5) and/or a receiving unit (9) in the form of an optical unit, in particular having a CCD sensor system (22).

10. Measuring device according to one of Claims 1 to 9, **characterized in that** the electronics unit (11) is designed for adapting a scale in the case of changing measurement results, in particular for continuously adapting the display during a movement of the measuring device.

11. Measuring device according to one of Claims 1 to 10, having a further electronics unit and/or an evaluation unit integrated in the electronics unit (11), the evaluation unit being designed for comparing transmitted and received optical signals (6, 8) and conversion to a distance-proportional distance signal.

12. Measuring instrument and/or machine tool, in particular a transportable measuring device and/or machine tool, having a measuring device, preferably a distance measuring device (10), according to one of the preceding claims.

13. Measuring instrument and/or machine tool according to Claim 12, having a ruler support (13.1) to which the display unit (12) is connected, in particular in a fashion flush with an edge (19).

14. Measuring instrument and/or machine tool according to Claim 12 or 13, **characterized in that** the display unit (12) has a curve (16).

15. Measuring instrument and/or machine tool according to one of the preceding Claims 12 to 14, **characterized in that** the display unit (12) is arranged in a depression (20) in the ruler support (13.1), in particular being glued therein.

16. Measuring instrument and/or machine tool according to Claim 15, **characterized in that** the depression (20) has a depth dimension (a) which is in the region of, or less than, a thickness (d) of the measuring device.

## Revendications

1. Dispositif de mesure, notamment un dispositif de mesure de distance (10) destiné à effectuer une mesure de distance avec contact et/ou sans contact, comportant une unité d'affichage dans laquelle une unité d'affichage électro-optique (12) est combinée à une unité électronique (11) dans un système de circuit, dans lequel l'unité d'affichage (12) est conçue pour afficher de manière lisible un résultat de mesure et l'unité électronique (11) est conçue pour commander l'affichage du résultat de mesure, dans lequel l'unité d'affichage (12) est montée sur un substrat à couche mince pour réaliser un système de couches souple, **caractérisé en ce que** l'unité électronique (11) est conçue pour générer une échelle destinée au résultat de mesure, présentant notamment des divisions (13) et/ou des valeurs numériques (15) afin de représenter une section d'une étendue de mesure, et l'unité d'affichage (12) est réalisée sous la forme d'une règle numérique destinée à reproduire l'échelle.

2. Dispositif de mesure selon la revendication 1, **caractérisé en ce que** l'unité d'affichage (12) est réalisée sous la forme d'un afficheur sous forme de feuille.

3. Dispositif de mesure selon la revendication 1 ou 2, **caractérisé en ce que** le système de circuit est imprimé sur le substrat à couche mince.

4. Dispositif de mesure selon l'une quelconque des revendications 1 à 3, **caractérisé en ce que** le substrat est réalisé sous la forme d'un matériau de polyester.

5. Dispositif de mesure selon l'une quelconque des revendications 1 à 4, **caractérisé en ce que** l'unité d'affichage (12) présente une épaisseur de couche inférieure à un demi-millimètre.

6. Dispositif de mesure selon l'une quelconque des revendications 1 à 5, **caractérisé en ce que** l'unité d'affichage (12) est conçue pour l'affichage en couleur du résultat de mesure.

7. Dispositif de mesure selon l'une quelconque des revendications 1 à 6, **caractérisé en ce que** l'unité d'affichage (12) présente une structure multicouche, notamment une structure multicouche destinée à afficher une composante rouge et/ou verte et/ou bleue d'un affichage en couleurs.

8. Dispositif de mesure selon l'une quelconque des revendications 1 à 7, comportant une alimentation en énergie (2) indépendante du réseau.

9. Dispositif de mesure selon l'une quelconque des revendications 1 à 8, comportant en outre une unité d'émission et/ou de réception, et comportant notamment une unité d'émission sous la forme d'une diode laser (5) et/ou une unité de réception (9) sous la forme d'une optique, comportant notamment un capteur à CCD (22).

10. Dispositif de mesure selon l'une quelconque des revendications 1 à 9, **caractérisé en ce que** l'unité électronique (11) est conçue pour adapter une échelle à des résultats de mesure variables, notamment destinés à adapter en continu l'affichage à un mouvement du dispositif de mesure.

11. Dispositif de mesure selon l'une quelconque des revendications 1 à 10, comportant une autre unité électronique et/ou une unité d'évaluation intégrée à l'unité électronique (11), dans lequel l'unité d'évaluation est conçue pour comparer un signal optique (6, 8) et émis et reçu et pour le convertir en un signal de distance proportionnel à la distance.

12. Appareil de mesure et/ou d'usinage, notamment un appareil de mesure et/ou d'usinage transportable comportant un dispositif de mesure, de préférence un dispositif de mesure de distance (10) selon l'une quelconque des revendications précédentes.

13. Appareil de mesure et/ou d'usinage selon la revendication 12, comportant un support de règle (13.1) auquel est reliée l'unité d'affichage (12), notamment en contact étroit avec un bord (19).

14. Appareil de mesure et/ou d'usinage selon la revendication 12 ou 13, **caractérisé en ce que** l'unité d'affichage (12) présente une courbure (16).

15. Appareil de mesure et/ou d'usinage selon l'une quelconque des revendications 12 à 14 précédentes, **caractérisé en ce que** l'unité d'affichage (12) est disposée dans un évidement (12) du support de règle (13.1) et y est notamment collée.

16. Appareil de mesure et/ou d'usinage selon la revendication 15, **caractérisé en ce que** l'évidement (20) présente une dimension en profondeur (1) qui est de l'ordre d'une épaisseur (d) du dispositif de mesure ou est inférieure à celle-ci.
